# EUROPEAN PATENT APPLICATION

(11) **EP 1 096 390 A2**
(43) Date of publication of application: **02.05.2001**
(21) Application number: 00123881.5
(22) Date of filing: 02.11.2000
(51) Int. Cl.: G06F 17/14

(54) **Two-dimensional orthogonal transformation method**

(30) Priority: 01.11.1999 JP 31073499
(71) Applicant: Matsushita Electric Industrial Co., Ltd., Kadoma-shi, Osaka 571-8501 (JP)
(72) Inventor: Tanaka, Yasushi, Moriguchi-shi, Osaka 570-0008 (JP); Okamoto, Kiyoshi, Ithaca, NY 14850 (US)
(74) Representative: Grünecker, Kinkeldey, Stockmair & Schwanhäusser Anwaltssozietät

(57) **Abstract**

First, a multiply-add operation is performed on a first-row vector of input picture data and a first-column vector of a transform coefficient matrix to yield a first matrix element of intermediate data. Next, a multiply-add operation is performed on a second-row vector of the input picture data and the first-column vector of the transform coefficient matrix to obtain a second matrix element of the intermediate data. In this manner, respective matrix elements are yielded vertically for the intermediate data in performing the first-stage (horizontal) one-dimensional orthogonal transformation. Thus, as soon as the 8^{th} matrix element (of the first column) has been obtained for the intermediate data, the second-stage (vertical) one-dimensional orthogonal transformation can be started. Consequently, desired resultant data of the two-dimensional orthogonal transformation can be obtained much faster and no memories are needed to store the result of the first-stage one-dimensional orthogonal transformation thereon.

## Description

### BACKGROUND OF THE INVENTION

The present invention relates to a two-dimensional orthogonal transformation method applicable to a recorder-player (e.g., videotape recorder or videodisk player) for digitally writing and reading a video or audio signal.

A recorder-player for a moving picture signal compresses, transmits and stores data not just by motion compensation/estimation, orthogonal transformation (e.g., discrete cosine transform (DCT), in particular) and band division but also by variable length coding (VLC) like Huffman coding and arithmetic coding. For example, according to an MPEG standard, which is one of the international video compression standards, data is supposed to be processed on a macroblock basis to increase a compression rate. A macroblock is a coding unit composed of 16 vertical pixels by 16 horizontal pixels, and can be sub-divided into four blocks, each consisting of 8×8 pixels.

A two-dimensional DCT processor using distributed arithmetic (DA) is disclosed in United States Patent No. 4,791,598. The processor applies first-stage (horizontal) one-dimensional DCT to respective row vectors of a matrix that represents one block of input data (i.e., pixel data), thereby obtaining all the elements of an intermediate transform matrix. Next, the processor transposes the intermediate transform matrix and then performs second-stage (vertical) one-dimensional DCT on respective row vectors in the transpose of the intermediate transform matrix to yield a two-dimensional transformed matrix representing desired resultant data (transformed data).

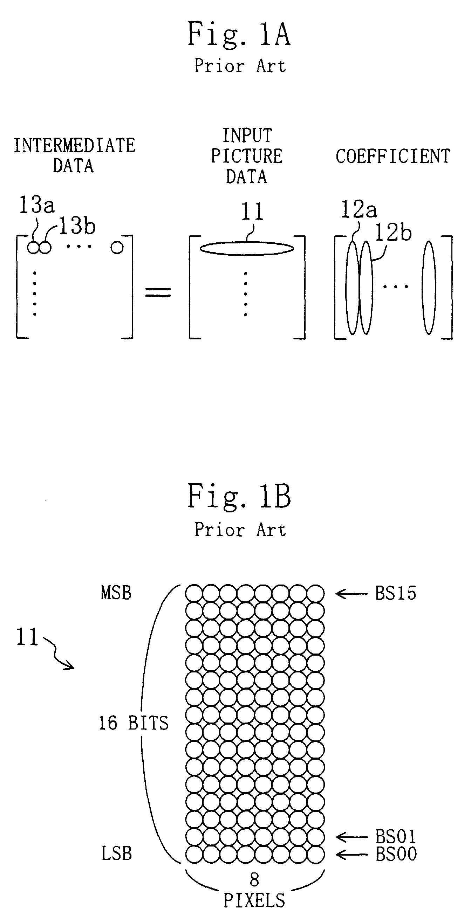

Figures **1A** and **1B** illustrate how the known two-dimensional DCT processor performs the first-stage (horizontal) one-dimensional DCT. In the illustrated example, each pixel data word is supposed to be represented by 16 bits. In Figure **1B**, each set of eight horizontal pixels of input picture data (which together form one row) have bits of the same order that are identified by a bit slice **BS00**, **BS01** or **BS15**. AS shown in Figure **1A**, first, the bit slice **BS00** (i.e., a collection of the least significant bits (LSBs) of the eight pixels constituting a first-row vector **11** of the input picture data) is multiplied by a first-column vector **12a** of a transform coefficient matrix to obtain a partial product. Next, the bit slice **BS01** and the first-column vector **12a** of the transform coefficient matrix are multiplied together to obtain another partial product. This operation will be performed 16 times, i.e., the number of bits of each pixel data word, and all of these resulting partial products are accumulated to yield a first matrix element **13a** of intermediate data. In the same way, a multiply-add operation is performed on the first-row vector **11** of the input picture data and the second-column vector **12b** of the transform coefficient matrix to yield a second matrix element **13b** of the intermediate data.

The known two-dimensional DCT processor yields the respective matrix elements of the intermediate data horizontally. Thus, the second-stage (vertical) one-dimensional DCT cannot be started at least until the 57^{th} matrix element (i.e., the first element on the eighth row) of the intermediate data is determined. As a result, the latency, which is represented as the number of cycles required after the first pixel data was input and before the first transformed data is output, becomes relatively long. In addition, a memory for storing the result of the first-stage (horizontal) one-dimensional DCT thereon is indispensable for the known two-dimensional DCT processor. The same statements are also true of a known two-dimensional inverse DCT (IDCT) processor.

### SUMMARY OF THE INVENTION

It is therefore an object of the present invention to obtain desired resultant data of a two-dimensional orthogonal transformation much faster without using any memory for storing the result of the first-stage one-dimensional orthogonal transformation thereon.

To achieve this object, according to the present invention, the order of processing is changed for the first-stage one-dimensional orthogonal transformation so that a data sequence needed for the second-stage one-dimensional orthogonal transformation can be yielded faster.

Specifically, in an inventive two-dimensional orthogonal transformation method, a matrix representing desired resultant data is computed by performing the steps of: obtaining an intermediate matrix by applying a horizontal one-dimensional orthogonal transformation to respective row vectors of a matrix representing input data; and applying a vertical one-dimensional orthogonal transformation to respective column vectors of the intermediate matrix. The inventive method is characterized in that the horizontal one-dimensional orthogonal transformation is carried out in such an order that once all elements of one of the column vectors of the intermediate matrix have been obtained, a first element of a next one of the column vectors is obtained.

In one embodiment of the present invention, as soon as a last element of a first one of the column vectors of the intermediate matrix has been obtained, the vertical one-dimensional orthogonal transformation can be started. As a result, the latency caused by the two-dimensional orthogonal transformation can be shortened and no memory is needed to store the result of the first-stage one-dimensional orthogonal transformation thereon.

### BRIEF DESCRIPTION OF THE DRAWINGS

Figures **1A** and **1B** schematically illustrate how to perform first-stage one-dimensional orthogonal transformation by a known two-dimensional orthogonal transformation method.
Figures **2A** and **2B** schematically illustrate how to perform first-stage one-dimensional orthogonal transformation by an inventive two-dimensional orthogonal transformation method.
Figure **3** is a block diagram illustrating an exemplary arrangement for a two-dimensional DCT processor utilizing the inventive method.
Figure **4** is a block diagram illustrating an exemplary arrangement for a two-dimensional IDCT processor utilizing the inventive method.
Figure **5** is a block diagram illustrating an exemplary arrangement for a two-dimensional DCT/IDCT processor utilizing the inventive method.
Figure **6** is a block diagram illustrating an exemplary arrangement for another two-dimensional DCT/IDCT processor utilizing the inventive method.

### DETAILED DESCRIPTION OF THE INVENTION

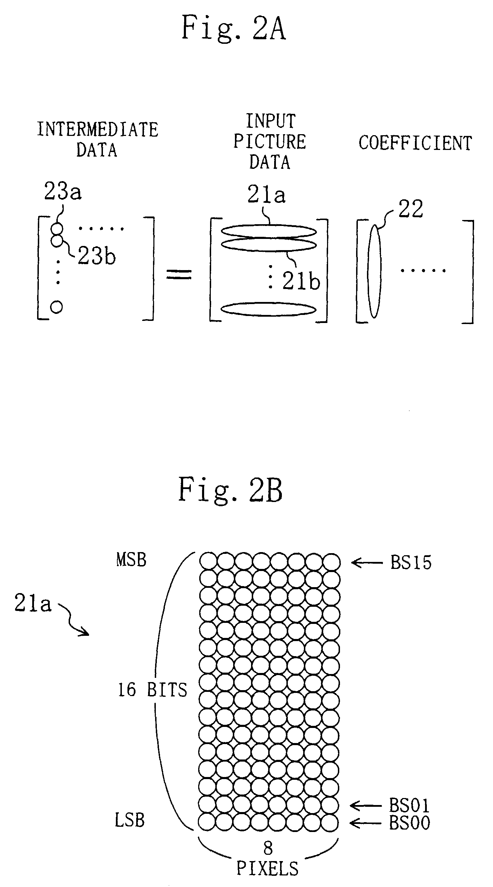

Figures **2A** and **2B** illustrate how to perform the first-stage (horizontal) one-dimensional orthogonal transformation according to the inventive two-dimensional orthogonal transformation method. It should be noted that this method is applicable not only to two-dimensional DCT but also to two-dimensional IDCT.

In Figure **2B**, each set of eight horizontal pixels of the first-row vector **21a** of the input picture data have bits of the same order that are identified by a bit slice **BS00**, **BS01** or **BS15**. As shown in Figure **2A**, first, the bit slice **BS00** (i.e., a collection of the LSBs of the eight pixels constituting the first-row vector **21a** of the input picture data) is multiplied by a first-column vector **22** of a transform coefficient matrix to obtain a partial product. Next, the bit slice **BS01** and the first-column vector **22** of the transform coefficient matrix are multiplied together to obtain another partial product. This operation will be performed on 16 bits and all of these resulting partial products are accumulated to yield a first matrix element **23a** of intermediate data. The next operation will be performed in the same way. However, according to the present invention, the computation is carried out in a vertical order as opposed to the prior art. Specifically, the multiply-add operation is performed on the second-row vector **21b** of the input picture data and the first-column vector **22** of the transform coefficient matrix to yield a second matrix element **23b** of the intermediate data. Since the respective matrix elements of the intermediate data are yielded vertically, the second-stage (vertical) one-dimensional DCT can be started as soon as the 8^{th} matrix element (on the first column) of the intermediate data is obtained.

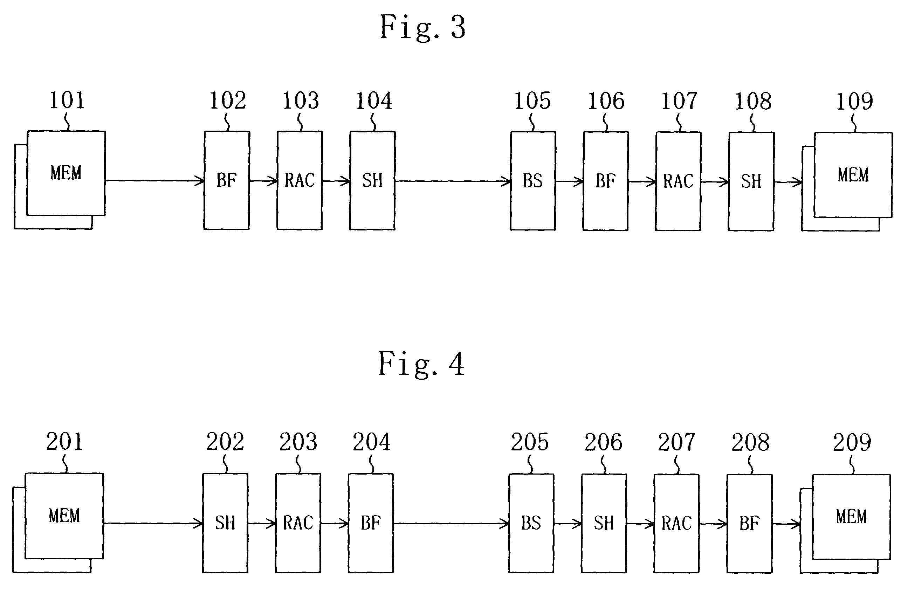

Figure **3** illustrates an exemplary arrangement for a two-dimensional DCT processor utilizing the inventive method. As shown in Figure **3**, the processor includes memories (MEMs) **101** and **109**, butterfly operation units (BFs) **102** and **106**, ROM-and-accumulators (RACs) **103** and **107**, shufflers (SHs) **104** and **108** and a bit slicer (BS) **105**. MEM **101** can read and write any bit at any address and has already stored macroblock data thereon.

The macroblock data is read out from MEM **101** one block after another, e.g., on a bit slice basis as shown in Figures **2A** and **2B**, and passed to BF **102**. BF **102** performs a butterfly operation on the bit slice of the data and outputs the result to RAC **103**. RAC **103** prepares a table for the butterflied data with respective addresses and accumulates the data using the table. Then, the accumulated data is sent to, and shuffled by, SH **104**. In this manner, the first-stage (horizontal) one-dimensional DCT is completed.

Next, to perform the second-stage (vertical) one-dimensional DCT, BS **105** slices the data into respective bit slices, each composed of 8 pixels. BF **106** performs a butterfly operation on the bit slices of the data and outputs the result to RAC **107**. RAC **107** prepares a table for the butterflied data with respective addresses and accumulates the data using the table. Then, the accumulated data is sent to, and shuffled by, SH **108**. In this manner, the second-stage (vertical) one-dimensional DCT is completed. Eventually, the result of the two-dimensional DCT performed in this manner is stored on MEM **109**.

Figure **4** illustrates an exemplary arrangement for a two-dimensional IDCT processor utilizing the inventive method. As shown in Figure **4**, the processor includes memories (MEMs) **201** and **209**, shufflers (SHs) **202** and **206**, ROM-and-accumulators (RACs) **203** and **207**, butterfly operation units (BFs) **204** and **208** and a bit slicer (BS) **205**. MEM **201** can read and write any bit at any address and has already stored macroblock data thereon.

The macroblock data is read out from MEN **201** one block after another, e.g., on a bit slice basis as shown in Figures **2A** and **2B**, and passed to SH **202**. SH **202** shuffles the bit slice of the data and outputs the result to RAC **203**. RAC **203** prepares a table for the shuffled data with respective addresses and accumulates the data using the table. Then, the accumulated data is sent to, and butterflied by, BF **204**. In this manner, the first-stage (horizontal) one-dimensional IDCT is completed.

Next, to perform the second-stage (vertical) one-dimensional IDCT, BS **205** slices the data into respective bit slices, each composed of 8 pixels. SH **206** shuffles the bit slices of the data and outputs the result to RAC **207**. RAC **207** prepares a table for the shuffled data with respective addresses and accumulates the data using the table. Then, the accumulated data is sent to, and butterflied by, BF **208**. In this manner, the second-stage (vertical) one-dimensional IDCT is completed. Eventually, the result of the two-dimensional IDCT performed in this manner is stored on MEM **209**.

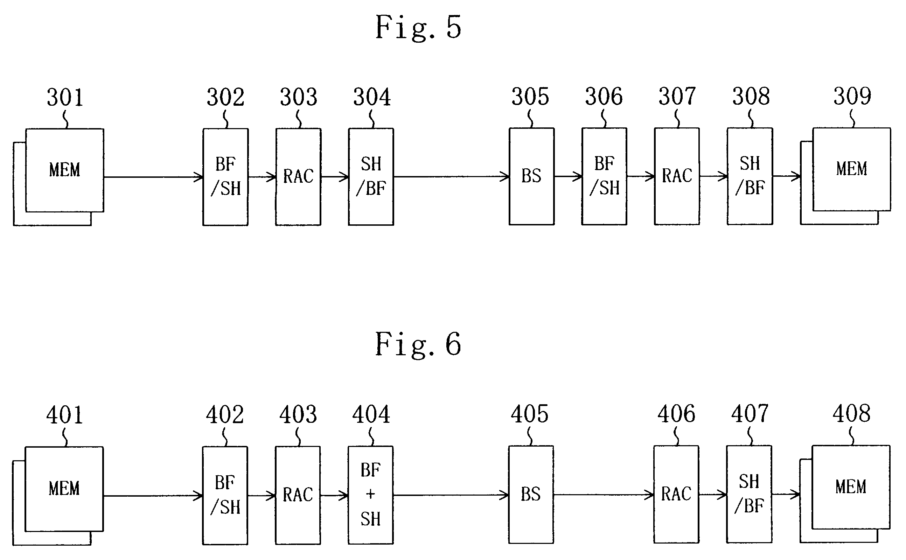

Figure **5** illustrates an exemplary arrangement for a two-dimensional DCT/IDCT processor utilizing the inventive method. As shown in Figure **5**, the processor includes memories (MEMs) **301** and **309**, butterfly operation units/shufflers (BFs/SHs) **302** and **306**, ROM-and-accumulators (RACs) **303** and **307**, shufflers/butterfly operation units (SHs/BFs) **304** and **308** and a bit slicer (BS) **305**. MEM **301** can read and write any bit at any address and has already stored macroblock data thereon.

The macroblock data is read out from MEM **301** one block after another, e.g., on a bit slice basis as shown in Figures **2A** and **2B**, and passed to BF/SH **302**. BF/SH **302** performs butterfly operation and shuffling on the bit slice of the data and outputs the result to RAC **303**. RAC **303** prepares a table for the butterflied and shuffled data with respective addresses and accumulates the data using the table. Then, the accumulated data is sent to, and shuffled and butterflied by, SH/BF **304**. In this manner, the first-stage (horizontal) one-dimensional DCT/IDCT is completed.

Next, to perform the second-stage (vertical) one-dimensional DCT/IDCT, BS **305** slices the data into respective bit slices, each composed of 8 pixels. BF/SH **306** performs butterfly operation and shuffling on the bit slices of the data and outputs the result to RAC **307**. RAC **307** prepares a table for the butterflied and shuffled data with respective addresses and accumulates the data using the table. Then, the accumulated data is sent to, and shuffled and butterflied by, SH/BF **308**. In this manner, the second-stage (vertical) one-dimensional DCT/IDCT is completed. Eventually, the result of the two-dimensional DCT/IDCT performed in this manner is stored on MEM **309**.

Figure **6** illustrates an exemplary arrangement for another two-dimensional DCT/IDCT processor utilizing the inventive method. As shown in Figure **6**, the processor includes memories (MEMs) **401** and **408**, a butterfly operation unit/shuffler (BF/SH) **402**, ROM-and-accumulators (RACs) **403** and **406**, a butterfly operation unit and shuffler (BF+SH) **404**, a bit slicer (BS) **405** and a shuffler/butterfly operation unit (SH/BF) **407**.

In this case, MEM **401**, BF/SH **402**, RAC **403** and BS **405** are the same as the counterparts **301**, **302**, **303** and **305**, respectively, shown in Figure **5**. Also, RAC **406**, SH/BF **407** and MEM **408** are the same as the counterparts **307**, **308** and **309**, respectively, shown in Figure **5**. In the example shown in Figure **5**, SH/BF **304** and BF/SH **306** have totally the same configuration. And the data may be processed by BF/SH **306** and then by BS **305**, which is opposite to the order illustrated in Figure **5**. Thus, in the example illustrated in Figure **6**, SH/BF **304** and BF/SH **306** are combined into BF+SH **404** to reduce the circuit size. In the other respects, the processor shown in Figure **6** is the same as that shown in Figure **5**.

## Claims

1. A two-dimensional orthogonal transformation method for computing a matrix representing desired resultant data by performing the steps of:
obtaining an intermediate matrix by applying a horizontal one-dimensional orthogonal transformation to respective row vectors of a matrix representing input data; and
applying a vertical one-dimensional orthogonal transformation to respective column vectors of the intermediate matrix,
characterized in that the horizontal one-dimensional orthogonal transformation is carried out in such an order that once all elements of one of the column vectors of the intermediate matrix have been obtained, a first element of a next one of the column vectors is obtained.

2. The method of Claim 1, wherein as soon as a last element of a first one of the column vectors of the intermediate matrix has been obtained, the vertical one-dimensional orthogonal transformation is started.
